# EUROPÄISCHE PATENTANMELDUNG

(11) **EP 4 706 358 A1**
(43) Veröffentlichungstag der Anmeldung: **11.03.2026**
(21) Anmeldenummer: 25201030.1
(22) Anmeldetag: 09.09.2025
(51) Int. Cl.: A01B 63/00, A01D 41/14, A01D 78/14, A01B 73/04, A01D 67/00

(54) **LANDWIRTSCHAFTLICHE ERNTEMASCHINE**

(30) Priorität: 10.09.2024 DE 102024126012
(71) Anmelder: CLAAS Saulgau GmbH, 88348 Bad Saulgau (DE)
(72) Erfinder: Birkhofer, Stefan, 78333 Stockach (DE); Sauter, Stefan, 88529 Zwiefalten (DE)

(57) **Zusammenfassung**

Landwirtschaftliche Erntemaschine (10), mit einem Rahmen oder einem Gestell (11), an welchem ein Fahrwerk (15) derselben angreift, mit Hauptauslegern (17), wobei zu beiden Seiten des Rahmens oder Gestells (11) jeweils ein Hauptausleger (17) am Rahmen oder Gestell (11) derart angreift, dass zur Überführung der Erntemaschine (10) zwischen einer Arbeitsstellung und Transportstellung der jeweilige Hauptausleger (17) relativ zum Rahmen oder Gestell (11) verlagerbar ist, mit Entlastungsauslegern (20, 21), wobei an jedem der beiden Hauptausleger (17) jeweils zwei Entlastungsausleger (20, 21) angreifen, die über Entlastungszylinder (22, 23) zur Bereitstellung einer Entlastungsfunktion individuell relativ zum jeweiligen Hauptausleger (17) verlagerbar sind, und mit Arbeitseinheiten (24), wobei an jedem der Entlastungsausleger (20, 21) jeweils mindestens eine Arbeitseinheit (24) angreift, die zur Bereitstellung einer Bodenanpassungsfunktion relativ zum jeweiligen Entlastungsausleger (20, 21) verlagerbar ist.

## Beschreibung

Die Erfindung betrifft eine landwirtschaftliche Erntemaschine.

Aus der Praxis sind landwirtschaftliche Erntemaschinen bekannt, die an ein Zugfahrzeug angekoppelt werden können, um mithilfe des Zugfahrzeugs ziehend, also durch das Zugfahrzeug gezogen, fortbewegt werden können. Bei solchen ziehend durch ein Zugfahrzeug fortbewegten landwirtschaftlichen Erntemaschinen handelt es sich insbesondere um Futtererntemaschinen, wie zum Beispiel Schwader oder Wender.

Aus der Praxis bekannte landwirtschaftliche Erntemaschinen verfügen über einen Rahmen oder ein Gestell, wobei an dem Rahmen bzw. Gestell einerseits ein Fahrwerk und andererseits eine Deichsel angreifen. Über das Fahrwerk stützt sich die landwirtschaftliche Erntemaschine bei der Fortbewegung derselben auf einem Untergrund ab. Über die Deichsel, nämlich über einen an der Deichsel angreifenden Ankoppelbock, ist die landwirtschaftliche Erntemaschine an ein Zugfahrzeug ankoppelbar. An dem Rahmen oder Gestell greifen bei aus der Praxis bekannten landwirtschaftlichen Erntemaschinen Ausleger mit an den Auslegern befestigten Arbeitseinheiten an.

Mit zunehmender Arbeitsbreite einer landwirtschaftlichen Erntemaschine steigt die Anzahl der Arbeitseinheiten. Bislang bereitet es Schwierigkeiten, bei großen Arbeitsbreiten von insbesondere mehr als 10 Metern für die Arbeitseinheiten einerseits eine Entlastungsfunktion und andererseits eine Bodenanpassungsfunktion zielgerichtet bereitzustellen.

Hiervon ausgehend liegt der vorliegenden Erfindung die Aufgabe zugrunde, eine landwirtschaftliche Erntemaschine bereitzustellen, die auch bei einer großen Arbeitsbreite für die Arbeitseinheiten eine zielgerichtete Entlastungsfunktion sowie Bodenanpassungsfunktion bereitstellt.

Diese Aufgabe wird durch eine landwirtschaftliche Erntemaschine nach Anspruch 1 gelöst.

Die erfindungsgemäße landwirtschaftliche Erntemaschine weist einen Rahmen oder ein Gestell auf, an welchem ein Fahrwerk angreift.

Die erfindungsgemäße landwirtschaftliche Erntemaschine weist ferner Hauptausleger auf, wobei zu beiden Seiten des Rahmens oder Gestells jeweils ein Hauptausleger am Rahmen oder Gestell derart angreift, dass zur Überführung der Erntemaschine zwischen einer Arbeitsstellung und Transportstellung der jeweilige Hauptausleger relativ zum Rahmen oder Gestell verlagerbar ist.

Die erfindungsgemäße landwirtschaftliche Erntemaschine weist ferner Entlastungsausleger auf, wobei an jedem der beiden Hauptausleger jeweils zwei Entlastungsausleger angreifen, die über Entlastungszylinder zur Bereitstellung einer Entlastungsfunktion individuell relativ zum jeweiligen Hauptausleger verlagerbar sind.

Die erfindungsgemäße landwirtschaftliche Erntemaschine weist ferner Arbeitseinheiten auf, wobei an jedem der Entlastungsausleger jeweils mindestens eine Arbeitseinheit angreift, die zur Bereitstellung einer Bodenanpassungsfunktion relativ zum jeweiligen Entlastungsausleger verlagerbar sind.

Die erfindungsgemäße landwirtschaftliche Erntemaschine weist die beiden Hauptausleger auf, wobei zu beiden Seiten des Rahmens oder Gestells jeweils einer der beiden Hauptausleger am Rahmen oder Gestell angreift. An jedem der beiden Hauptausleger greifen jeweils zwei Entlastungsausleger an. Jeder der Entlastungsausleger ist relativ zum jeweiligen Hauptausleger verlagerbar, um eine entlastungsauslegerindividuelle Entlastungsfunktion für die am jeweilige Entlastungsausleger angreifenden Arbeitseinheiten bereitzustellen. Ferner ist jede Arbeitseinheit der erfindungsgemäßen landwirtschaftlichen Erntemaschine relativ zum jeweiligen Entlastungsausleger zur Bereitstellung einer individuellen Bodenentlastungsfunktion verlagerbar. Somit kann selbst bei großen Arbeitsbreiten der erfindungsgemäßen landwirtschaftlichen Erntemaschine für jede Arbeitseinheit zielgerichtet eine Entlastungsfunktion und Bodenanpassungsfunktion bereitgestellt werden.

Vorzugsweise ist der jeweilige Hauptausleger als Teleskopausleger mit einem am Rahmen oder Gestell angreifenden ersten Teleskopauslegerteil und einem relativ zum ersten Teleskopauslegerteil teleskopierbaren zweiten Teleskopauslegerteil ausgebildet, wobei vorzugsweise am jeweiligen zweiten Teleskopauslegerteil jeweils zwei Entlastungsausleger angreifen, und wobei zur Bereitstellung der entlastungsauslegerindividuellen Entlastungsfunktion an jedem der beiden jeweiligen Entlastungsausleger jeweils ein Entlastungszylinder mit einem ersten Abschnitt und jeder der Entlastungszylinder mit einem zweiten Abschnitt am jeweiligen zweiten Teleskopauslegerteil angreift. Dies ist bevorzugt, um in der Arbeitsstellung große Arbeitsbreiten bereitzustellen und in der Transportstellung die Abmessung der landwirtschaftlichen Erntemaschine zu verringern. Darüber hinaus ermöglicht ein Teleskopausleger die Formung bzw. Ablage unterschiedlicher Schwade, wie beispielsweise Mittelschwade, Seitenschwade oder die Formung von Doppelschwaden.

Vorzugsweise ist ein erster der beiden jeweiligen Entlastungsausleger ein bezogen auf eine Längsmittelachse des Rahmens oder Gestells in der Arbeitsstellung innen liegender Entlastungsausleger und ein zweiter der beiden jeweiligen Entlastungsausleger ein bezogen auf die Längsmittelachse des Rahmens oder Gestells in der Arbeitsstellung außen liegender Entlastungsausleger, wobei der innen liegende Entlastungsausleger um eine an demselben außen liegende Achse und der außen liegende Entlastungsausleger um eine an demselben innen liegende Achse über den jeweiligen Entlastungszylinder relativ zum jeweiligen Hauptausleger verlagerbar, insbesondere schwenkbar, ist. Die am jeweiligen innen liegenden Entlastungsausleger angreifende Arbeitseinheit ist um eine am innen liegenden Entlastungsausleger vorzugsweise mittig liegende Achse und die am jeweiligen außen liegenden Entlastungsausleger angreifende Arbeitseinheit um eine am außen liegenden Entlastungsausleger vorzugsweise mittig liegende Achse relativ zum jeweiligen Entlastungsausleger verlagerbar oder pendelbar, insbesondere schwenkbar. Dies ist besonders bevorzugt, um für den jeweiligen Entlastungsausleger und damit für die am jeweiligen Entlastungsausleger angreifende Arbeitseinheit die Entlastungsfunktion sowie Bodenanpassungsfunktion zielgerichtet bereitzustellen.

Vorzugsweise ist ein an dem ersten jeweiligen Entlastungsausleger angreifender Entlastungszylinder als Druckzylinder und ein an dem zweiten jeweiligen Entlastungsausleger angreifender Entlastungszylinder als Zugzylinder ausgebildet. Dies ist für die Bereitstellung der Entlastungsfunktion besonders bevorzugt und ermöglicht es, die Entlastungszylinder sowie weitere erforderliche Bauteile vorteilhaft raumsparend innerhalb der als Hohlprofil ausgebildeten Ausleger unterzubringen.

Vorzugsweise sind die beiden jeweiligen Entlastungsausleger gekoppelt, um die relative Verlagerbarkeit der beiden jeweiligen Entlastungsausleger in der Arbeitsstellung der Erntemaschine zueinander zu begrenzen. Vorzugsweise sind ferner die an den beiden jeweiligen Entlastungsauslegern angreifenden Arbeitseinheiten gekoppelt, um die relative Verlagerbarkeit der beiden jeweiligen Arbeitseinheiten in der Arbeitsstellung der Erntemaschine zueinander zu begrenzen. Durch die Begrenzung der relativen Verlagerbarkeit der beiden jeweiligen Entlastungsausleger zueinander sowie durch die Begrenzung der relativen Verlagerbarkeit der an den beiden jeweiligen Entlastungsauslegern angreifenden Arbeitseinheiten kann in der Arbeitsstellung bei der Bereitstellung der Entlastungsfunktion und Bodenanpassungsfunktion ein ordnungsgemäßer Betrieb der landwirtschaftlichen Erntemaschine, insbesondere beim Transport von Erntegut, bereitgestellt werden.

Der Schwenkwinkel der einzelnen Arbeitseinheiten relativ zum jeweiligen Entlastungsausleger kann zusätzlich durch mechanische Anschläge begrenzt werden.

Im Hauptarbeitsbereich können sich die Arbeitseinheiten jedoch unabhängig voneinander dem Boden anpassen.

Vorzugsweise ist die landwirtschaftliche Erntemaschine eine Futtererntemaschine, insbesondere ein Merger oder Pickup-Band-Schwader, wobei an jedem der Entlastungsausleger als Arbeitseinheit eine Pickup zur Aufnahme von Erntegut vom Boden und ein Bandfördersegment zur Förderung des Ernteguts angreift. Die Erfindung kommt vorzugsweise bei einem Pickup-Band-Schwader, der auch als Merger bezeichnet wird, zum Einsatz.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine perspektivische Ansicht von hinten auf eine erfindungsgemäße landwirtschaftliche Erntemaschine;
- Fig. 2: einen Ausschnitt aus Fig. 1;
- Fig. 3: ein Detail aus Fig. 2;
- Fig. 4: den Ausschnitt der Fig. 2 von hinten;
- Fig. 5: ein Detail aus Fig. 2;
- Fig. 6: den Ausschnitt der Fig. 2 von oben;
- Fig. 7: ein Detail aus Fig. 5;
- Fig. 8: einen Querschnitt durch das Detail der Fig. 7;
- Fig. 9: das Detail der Fig. 7 in unterschiedlichen Zuständen.

Die hier vorliegende Erfindung betrifft eine landwirtschaftliche Erntemaschine 10. Bei der landwirtschaftlichen Erntemaschine 10 handelt es sich insbesondere um eine Futtererntemaschine, die zur ziehenden Fortbewegung durch ein Zugfahrzeug an ein Zugfahrzeug angekoppelt werden kann.

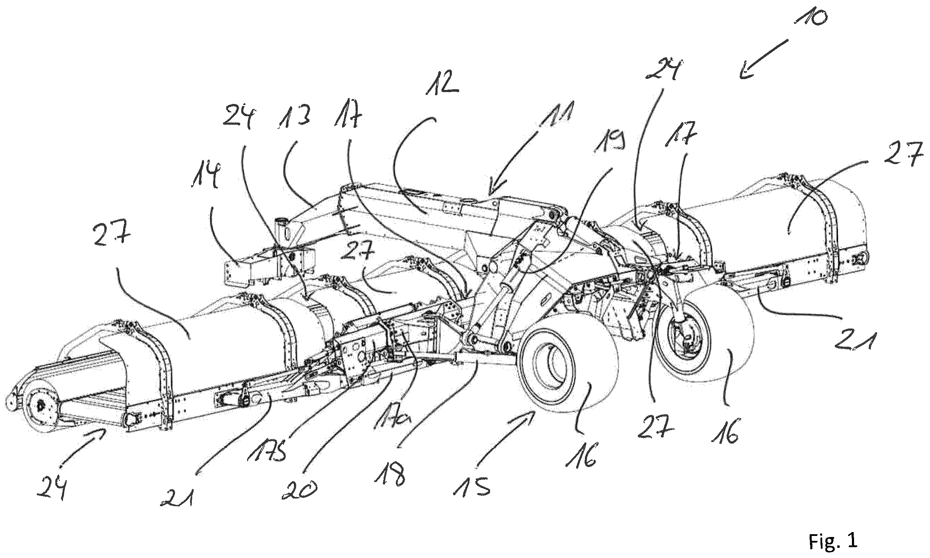

Fig. 1 zeigt eine erfindungsgemäße landwirtschaftliche Erntemaschine 10 in Arbeitsstellung. Die landwirtschaftliche Erntemaschine 10 verfügt über einen Rahmen oder ein Gestell 11 mit einem Längsträger 12, wobei am Längsträger 12 des Rahmens oder Gestells 11 eine Deichsel 13 befestigt ist. Über die Deichsel 13 bzw. einen an der Deichsel 13 gelenkig angreifenden Ankoppelbock 14 ist die landwirtschaftliche Erntemaschine 14 an ein Zugfahrzeug ankoppelbar, um vom Zugfahrzeug ziehend fortbewegt zu werden.

Am Rahmen oder Gestell 11 der landwirtschaftlichen Erntemaschine 10 greift ein Fahrwerk 15 mit Rädern 16 an, wobei sich beim Fortbewegen der landwirtschaftlichen Erntemaschine 10 dieselbe über die Räder 16 und damit über das Fahrwerk 15 auf einen Untergrund abstützt.

Die landwirtschaftliche Erntemaschine 10 verfügt über zwei Hauptausleger 17. Zu jeder Seite des Rahmens 11 bzw. des Längsträgers 12 greift jeweils ein Hauptausleger 17 am Rahmen oder Gestell 11 an, und zwar derart, dass zur Überführung der Erntemaschine 10 zwischen der in Fig. 1 gezeigten Arbeitsstellung und einer nichtgezeigten Transportstellung der jeweilige Hauptausleger 17 relativ zum Rahmen oder Gestell 11 verlagerbar ist.

Zur Bereitstellung dieser Verlagerbarkeit des jeweiligen Hauptauslegers 17 relativ zum Rahmen oder Gestell 11 greifen am Rahmen oder Gestell 11 sowie jeweiligen Hauptausleger 17 jeweils zwei Hauptzylinder 18, 19 an, um den jeweiligen Hauptausleger 17 zusammen mit den am jeweiligen Hauptausleger 17 angreifenden Baugruppen relativ zum Rahmen oder Gestell 11 zu verlagern.

Die landwirtschaftliche Erntemaschine 10 verfügt weiterhin über Entlastungsausleger 20, 21. An jedem der beiden Hauptausleger 17 greifen jeweils zwei Entlastungsausleger 20, 21 an, nämlich ein bezogen auf die Längsmittelachse bzw. den Längsträger 12 der Erntemaschine 10 erster, innerer bzw. innen liegender Entlastungsausleger 20 und einen bezogen auf den Längsträger 12 bzw. die Längsmittelachse der Erntemaschine 10 zweiter, äußerer bzw. außen liegender Entlastungsausleger 21.

Jeder der Entlastungsausleger 20, 21 ist über einen individuellen Entlastungszylinder 22, 23 zur Bereitstellung einer entlastungsauslegerindividuellen Entlastungsfunktion individuell zum jeweiligen Hauptausleger 17 verlagerbar. So greift am ersten jeweiligen Entlastungsausleger 20 ein erster Entlastungszylinder 22 und am jeweiligen zweiten Entlastungsausleger 21 ein jeweiliger zweiter Entlastungszylinder 23 an, wobei diese Entlastungszylinder 22, 23 auch am jeweiligen Hauptausleger 17 angreifen.

Somit kann jeder Entlastungsausleger 20, 21 der landwirtschaftlichen Erntemaschine 10 über seinen jeweiligen Entlastungszylinder 22, 23 zur Bereitstellung der entlastungsauslegerindividuellen Entlastungsfunktion individuell relativ zum jeweiligen Hauptausleger 17 verlagert werden.

Die landwirtschaftliche Erntemaschine 10 weist weiterhin Arbeitseinheiten 24 auf, wobei an jedem Entlastungsausleger 20, 21 jeweils eine Arbeitseinheit 24 angreift. Im gezeigten Ausführungsbeispiel, bei welchem die landwirtschaftliche Erntemaschine 10 als Merger und damit Pickup-Band-Schwader ausgebildet ist, umfasst jede Arbeitseinheit 24 eine Pickup 25 und ein Bandfördersegment 26. Für einige der in den Figuren gezeigten Arbeitseinheiten 24 sind die jeweilige Pickup 25 und das jeweilige Bandfördersegment 26 von einer Abdeckung 27 verdeckt.

Jede der Arbeitseinheiten 24 der landwirtschaftlichen Erntemaschine 10 greift an dem jeweiligen Entlastungsausleger 20, 21 derart an, dass die jeweilige Arbeitseinheit 24 zur Bereitstellung einer Bodenanpassungsfunktion relativ zum jeweiligen Entlastungsausleger 20, 21 verlagerbar ist.

Im gezeigten Ausführungsbeispiel ist jeder der Hauptausleger 17 als Teleskopausleger mit einem am Rahmen oder Gestell 11 angreifenden ersten Teleskopauslegerteil 17a und einem relativ zum ersten Teleskopauslegerteil 17a teleskopierbaren zweiten Teleskopauslegerteil 17b ausgebildet. Dies ist bevorzugt, um in Arbeitsstellung eine große Arbeitsbreite bereitzustellen, und in Transportstellung die Abmessung der landwirtschaftlichen Erntemaschine 10 zu reduzieren.

An jedem der zweiten Teleskopauslegerteile 17b der beiden Hauptausleger 17 greifen jeweils zwei Entlastungsausleger 20, 21 an. Zur Bereitstellung der entlastungsauslegerindividuellen Entlastungsfunktion greift an jedem der beiden jeweiligen Entlastungsausleger 20, 21 der jeweilige Entlastungszylinder 22, 23 mit einem ersten Abschnitt an, wobei jeder der Entlastungszylinder 22, 23 mit einem zweiten Abschnitt am jeweiligen zweiten Teleskopauslegerteil 17b des jeweiligen Hauptauslegers 17 angreift.

Im gezeigten, bevorzugten Ausführungsbeispiel ist der jeweilige auf die Längsmittelachse bzw. den Längsträger 12 des Rahmens oder Gestells 11 in der Arbeitsstellung erste, innere bzw. innen liegende Entlastungsausleger 20 um eine an demselben außen liegende Achse 28 relativ zum Hauptausleger 17, nämlich im gezeigten Ausführungsbeispiel relativ zum zweiten Teleskopauslegerteil 17b, schwenkend verlagerbar. Der bezogen auf die Längsmittelachse bzw. den Längslenker 12 des Rahmens oder Gestells 11 äußere bzw. außen liegende Entlastungsausleger 21 ist um eine an demselben innen liegende Achse 29 relativ zum jeweiligen Hauptausleger 17 verlagerbar, nämlich schwenkbar. In der Arbeitsstellung der Erntemaschine verlaufen diese Achsen 28, 29 in Längsrichtung bzw. parallel zur Längsmittelachse der Erntemaschine 10. Zur Verlagerung der Entlastungsausleger 20, 21 um die Achsen 28, 29 relativ zum Hauptausleger 17 greifen am Hauptausleger 17 und den Entlastungsauslegern 20, 21 die jeweiligen Entlastungszylinder 22, 23 an.

Die beiden Achsen 28 und 29 könnten auch durch eine gemeinsame Achse ersetzt werden.

Dabei ist im gezeigten Ausführungsbeispiel der am inneren bzw. innen liegenden Entlastungsausleger 20 angreifende Entlastungsausleger 22 als Druckzylinder und der am äußeren bzw. außen liegenden Entlastungsausleger 21 angreifende Entlastungszylinder 23 als Zugzylinder ausgebildet.

Die an den Entlastungsauslegern 20, 21 angreifenden Arbeitseinheiten 24 sind relativ zum jeweiligen Entlastungsausleger 20, 21 verlagerbar, nämlich schwenkbar. So ist die am jeweiligen inneren bzw. innen liegenden Entlastungsausleger 20 angreifende Arbeitseinheit 24 um eine am innen liegenden Entlastungsausleger 20 vorzugsweise mittig liegende Achse 30 und die am jeweiligen äußeren bzw. außen liegenden Entlastungsausleger 21 angreifende Arbeitseinheit 24 um eine am außen liegenden Entlastungsausleger 21 vorzugsweise mittig liegende Achse 31 relativ zum jeweiligen Entlastungsausleger 20, 21 verlagerbar, nämlich schwenkbar. Diese Achsen 30, 31, um welche die Arbeitseinheiten 24 relativ zu den Entlastungsauslegern 20, 21 schwenkbar sind, verlaufen wiederum in Arbeitsrichtung der Erntemaschine in Längsrichtung, also parallel zu den Achsen 28, 29.

Aus den obigen Ausführungen folgt demnach, dass jeder Entlastungsausleger 20, 21 zusammen mit der am jeweiligen Entlastungsausleger 20, 21 angreifenden Arbeitseinheit 24 zur Bereitstellung einer Entlastungsfunktion, nämlich Bodenentlastungsfunktion, über den jeweiligen Entlastungszylinder 22, 23 relativ zum jeweiligen Hauptausleger 17 verlagerbar ist. Ferner ist jede Arbeitseinheit 24 relativ zum jeweiligen Entlastungsausleger 20, 21 zur Bereitstellung einer Bodenanpassungsfunktion verlagerbar. Damit kann bei großen Arbeitsbreiten für jede Arbeitseinheit 24 zielgerichtet, nämlich individuell, die Entlastungsfunktion und Bodenanpassungsfunktion bereitgestellt werden.

Ferner ist jeder Entlastungsausleger 20, 21 zusammen mit seiner jeweiligen Arbeitseinheit 24 über den jeweiligen Hauptausleger 17 und die Hauptzylinder 18, 19 relativ zum Längsträger 12 des Gestells oder Rahmes 11 bei der Überführung der landwirtschaftlichen Erntemaschine 10 zwischen der Arbeitsstellung und Transportstellung verlagerbar.

Die beiden jeweiligen Entlastungsausleger 20, 21, die zur selben Seite des Gestells oder Rahmens 11 der landwirtschaftlichen Erntemaschine 10 angeordnet sind und an dem jeweiligen Hauptauslieger 17 angreifen, sind gekoppelt, um die relative Verlagerbarkeit der beiden jeweiligen Entlastungsausleger 20, 21 in der Arbeitsstellung der landwirtschaftlichen Erntemaschine 10 relativ zueinander zu begrenzen.

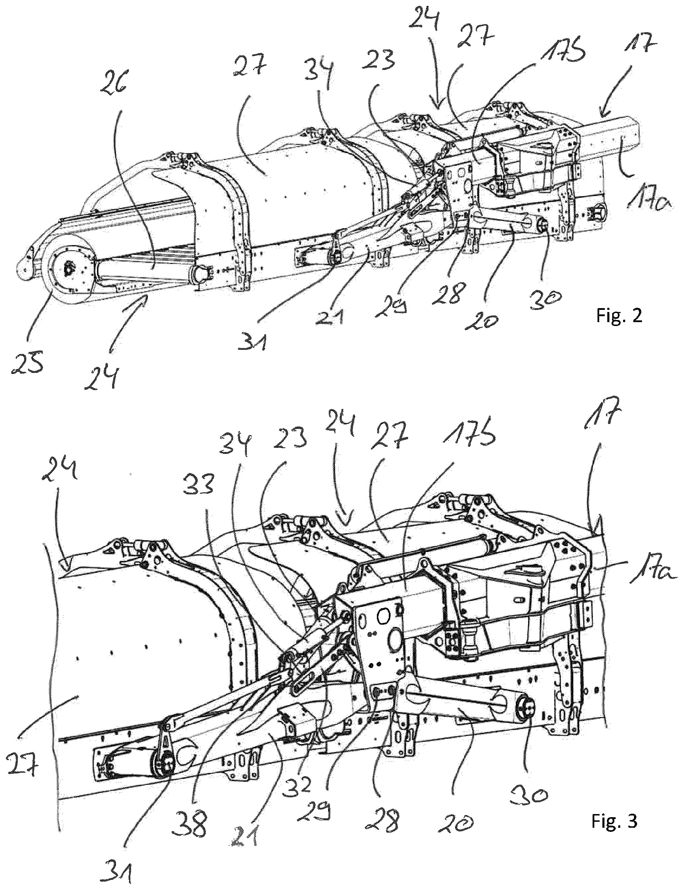

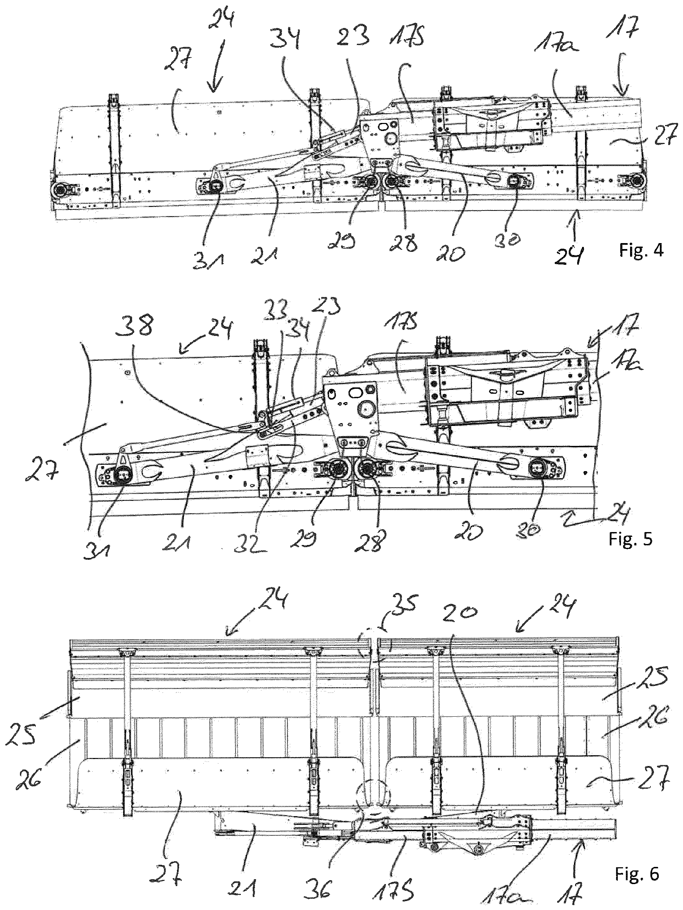

So zeigt insbesondere Fig. 3 und Fig. 5 eine Koppelstange 32, die mit einem ersten Ende gelenkig an einem der beiden jeweiligen Entlastungsausleger 20, 21, nämlich im gezeigten Ausführungsbeispiel an dem inneren bzw. innen liegenden Entlastungsausleger 20 angreift, wobei an einem gegenüberliegenden zweiten Ende der Koppelstange 32 ein Langloch 33 ausgebildet ist, in welchem der andere der beiden jeweilige Entlastungsausleger, im gezeigten Ausführungsbeispiel der jeweilige äußere bzw. außen liegende Entlastungsausleger 21, mit einem Vorsprung 38 geführt ist. Das Langloch 33 begrenzt dabei die relative Verlagerbarkeit der beiden jeweiligen Entlastungsausleger 20, 21 in der Arbeitsstellung der landwirtschaftlichen Erntemaschine 10 relativ zueinander.

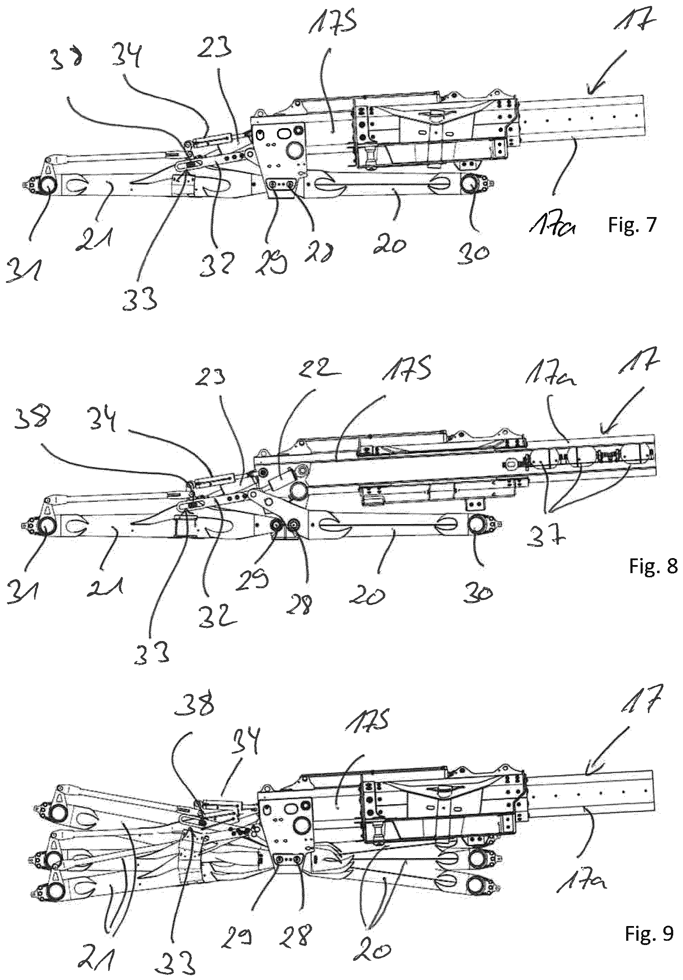

In der Arbeitsstellung der landwirtschaftlichen Erntemaschine 10 ist ein Sperrzylinder 34, der in der Transportstellung und vorzugsweise auch in einer Vorgewendestellung der landwirtschaftlichen Erntemaschine 10 aktiv ist, inaktiv. Ein inaktiver Sperrzylinder 34 lässt die Relativbewegung der Arbeitseinheiten 24 um ihre Mittelachsen zu. In der Transportstellung und ggf. der Vorgewendestellung der landwirtschaftlichen Erntemaschine 10 unterbindet der Sperrzylinder 34 hingegen eine Pendelbewegung der Arbeitseinheiten 24 um ihre Mittelachsen. Der Sperrzylinder 34 ist vorzugsweise auch dazu eingerichtet, die Arbeitseinheiten 24 in eine für die Klappung bzw. Verlagerung in die Transportstellung und/oder in eine Vorgewendestellung definierte, optimale Lage oder Ausrichtung zu bringen sowie in dieser zu fixieren. Fig. 9 zeigt die Entlastungsausleger 20, 21 in unterschiedlichen Relativpositionen zueinander.

Die an den jeweiligen Entlastungsauslegern 20, 21 der landwirtschaftlichen Erntemaschine 10 angreifenden Arbeitseinheiten 24 sind ebenfalls gekoppelt. Hierdurch wird die relative Verlagerbarkeit der beiden jeweiligen Arbeitseinheiten 24, die zur gleichen Seite des Rahmens oder Gestells 11 der landwirtschaftlichen Erntemaschine 10 an den jeweiligen Entlastungsauslegern 20, 21 angeordnet sind, in der Arbeitsstellung der landwirtschaftlichen Erntemaschine 10 relativ zueinander begrenzt. Entsprechende Kopplungseinrichtungen sind in den Figuren nicht gezeigt, dieselben können jedoch zwischen den nebeneinander positionierten Arbeitseinheiten 24 sowohl in dem in Fig. 6 vorderen Bereich 35 als auch in dem in Fig. 6 gezeigten hinteren Bereich 36 zwischen zur selben Seite des Gestells oder Rahmens 11 der landwirtschaftlichen Erntemaschine 10 positionierten Arbeitseinheiten 24 ausgebildet bzw. angeordnet sein.

Die im gezeigten Ausführungsbeispiel gezeigte landwirtschaftliche Erntemaschine 10 verfügt demnach über zwei Hauptausleger 17, die vorzugsweise als Teleskopausleger ausgebildet sind, wobei an jedem Hauptausleger 17 jeweils zwei Entlastungsausleger 20, 21 mit jeweils einer Arbeitseinheit 24 angreifen. Es sind demnach zwei Hauptausleger 17, vier Entlastungsausleger 20, 21 und vier Arbeitseinheiten 24 vorhanden. Zu jeder Seite des Rahmes oder Gestells sind jeweils ein Hauptausleger 17, zwei Entlastungsausleger 20, 21 und zwei Arbeitseinheiten 24 vorhanden. Jede Arbeitseinheit 24 ist relativ zum jeweiligen Entlastungsausleger 20, 21, an welchen dieselbe angreift, schwenkbar. Ferner ist jeder Entlastungsausleger 20, 21 relativ zum jeweiligen Hauptausleger 17, an welchem derselbe angreift, schwenkbar. Die Entlastungsausleger 20, 21 greifen dabei dann, wenn die Hauptausleger 17 Teleskopausleger sind, am verlagerbaren Teleskopauslegerteil 17b an.

Selbst bei großen Arbeitsbreiten von mehr als 10 Metern können für die einzelnen Arbeitseinheiten 24 sowohl die Bodenentlastungsfunktion als auch Bodenanpassungsfunktion zielgerichtet individuell bereitgestellt werden. Die Entlastungszylinder 32, 33 sind ebenso wie der Sperrzylinder 34 hydraulisch aktuierbar. Gemäß Fig. 8 sind Hydrospeicher 37 für diese Zylinder 32, 33, 34 innerhalb des jeweiligen Hauptauslegers 17 angeordnet. Die beiden Teleskopauslegerteile 17a, 17b sind vorzugsweise von Sechs-Kant-Profilen bereitgestellt.

Die individuelle Entlastungsfunktion und Bodenanpassungsfunktion für jede der Arbeitseinheiten 24 erfolgt schnell und agil. Jede Arbeitseinheit 24 kann durch eine entsprechende Druckregelung ihres Entlastungszylinders 20, 21 in einer gewünschten Position unter Bereitstellung einer gewünschten Bodenentlastung immer im optimalen Entlastungsbereich betrieben werden. Die Arbeitseinheiten 24 agieren unabhängig voneinander und können individuell entlastet werden. Lediglich in Grenzbereichen wird durch eine Kopplung die Verlagerbarkeit der Entlastungsausleger 20, 21 zueinander sowie die Verlagerbarkeit der Arbeitseinheiten 24 zueinander begrenzt, um die gewünschte Funktion der Erntemaschine 10 aufrechterhalten zu können und um kritische Zustände, wie zum Beispiel Kollisionen der einzelnen Arbeitseinheiten 24, zu vermeiden.

Die landwirtschaftliche Erntemaschine 10 ist vorzugsweise eine Futtererntemaschine wie ein Merger oder Pickup-Band-Schwader, wobei bei einem Merger an jedem der Entlastungsausleger 20, 21 als Arbeitseinheit 24 eine Pickup 25 und ein Bandfördersegment 26 angreift. Die landwirtschaftliche Erntemaschine 10 kann als Wender, Mähwerk ausgebildet sein.

### Bezugszeichenliste

- 10: Erntemaschine
- 11: Gestell/Rahmen
- 12: Längsträger
- 13: Deichsel
- 14: Ankoppelbock
- 15: Fahrwerk
- 16: Rad
- 17: Hauptausleger
- 17a: Teleskopauslegerteil
- 17b: Teleskopauslegerteil
- 18: Hauptzylinder
- 19: Hauptzylinder
- 20: Entlastungsausleger
- 21: Entlastungsausleger
- 22: Entlastungszylinder
- 23: Entlastungszylinder
- 24: Arbeitseinheit
- 25: Pickup
- 26: Bandförderersegment
- 27: Abdeckung
- 28: Achse
- 29: Achse
- 30: Achse
- 31: Achse
- 32: Koppelhebel
- 33: Langloch
- 34: Sperrzylinder
- 35: Bereich
- 36: Bereich
- 37: Hydrospeicher
- 38: Vorsprung

## Patentansprüche

1. Landwirtschaftliche Erntemaschine (10),
mit einem Rahmen oder einem Gestell (11), an welchem ein Fahrwerk (15) angreift,
mit Hauptauslegern (17), wobei zu beiden Seiten des Rahmens oder Gestells (11)jeweils ein Hauptausleger (17) am Rahmen oder Gestell (11) derart angreift, dass zur Überführung der Erntemaschine (10) zwischen einer Arbeitsstellung und Transportstellung der jeweilige Hauptausleger (17) relativ zum Rahmen oder Gestell (11) verlagerbar ist,
mit Entlastungsauslegern (20, 21), wobei an jedem der beiden Hauptausleger (17) jeweils zwei Entlastungsausleger (20, 21) angreifen, die über Entlastungszylinder (22, 23) zur Bereitstellung einer Entlastungsfunktion individuell relativ zum jeweiligen Hauptausleger (17) verlagerbar sind,
mit Arbeitseinheiten (24), wobei an jedem der Entlastungsausleger (20, 21) jeweils mindestens eine Arbeitseinheit (24) angreift, die zur Bereitstellung einer Bodenanpassungsfunktion relativ zum jeweiligen Entlastungsausleger (20, 21) verlagerbar ist.

2. Landwirtschaftliche Erntemaschine (10) nach Anspruch 1, **dadurch gekennzeichnet, dass** der jeweilige Hauptausleger (17) als Teleskopausleger mit einem am Rahmen oder Gestell (11) angreifenden ersten Teleskopauslegerteil (17a) und einem relativ zum ersten Teleskopauslegerteil (17a) teleskopierbaren zweiten Teleskopauslegerteil (17b) ausgebildet ist.

3. Landwirtschaftliche Erntemaschine (10) nach Anspruch 2, **dadurch gekennzeichnet, dass**
am jeweiligen zweiten Teleskopauslegerteil (17b) jeweils zwei Entlastungsausleger (20, 21) angreifen,
zur Bereitstellung der entlastungsauslegerindividuellen Entlastungsfunktion an jedem der beiden jeweiligen Entlastungsausleger (20, 21) jeweils ein Entlastungszylinder (22, 23) mit einem ersten Abschnitt und jeder der Entlastungszylinder (22, 23) mit einem zweiten Abschnitt am jeweiligen zweiten Teleskopauslegerteil (17b) angreift.

4. Landwirtschaftliche Erntemaschine (10) nach einem der Ansprüche 1 bis 3, **dadurch gekennzeichnet, dass** ein erster der beiden jeweiligen Entlastungsausleger ein bezogen auf eine Längsmittelachse des Rahmens oder Gestells (11) in der Arbeitsstellung innen liegender Entlastungsausleger (20) und ein zweiter der beiden jeweiligen Entlastungsausleger ein bezogen auf die Längsmittelachse des Rahmens oder Gestells (11) in der Arbeitsstellung außen liegender Entlastungsausleger (21) ist, wobei der innen liegende Entlastungsausleger (20) um eine an demselben außen liegende Achse (28) und der außen liegende Entlastungsausleger (21) um eine an demselben innen liegende Achse (29) über den jeweiligen Entlastungszylinder (22, 23) relativ zum jeweiligen Hauptausleger (17) verlagerbar ist.

5. Landwirtschaftliche Erntemaschine (10) nach Anspruch 4, **dadurch gekennzeichnet, dass** die Achsen (28, 29), um welche die Entlastungsausleger (20, 21) relativ zu dem jeweiligen Hauptausleger (17) schwenkbar sind, in der Arbeitsstellung der Erntemaschine (10) in Längsrichtung derselben verlaufen.

6. Landwirtschaftliche Erntemaschine (10) nach Anspruch 4 oder 5, **dadurch gekennzeichnet, dass** die am jeweiligen innen liegenden Entlastungsausleger (20) angreifende Arbeitseinheit (24) um eine am innen liegenden Entlastungsausleger (20) liegende Achse (30) und die am jeweiligen außen liegenden Entlastungsausleger (21) angreifende Arbeitseinheit (24) um eine am außen liegenden Entlastungsausleger (21) liegende Achse (31) relativ zum jeweiligen Entlastungsausleger (20, 21) verlagerbar ist.

7. Landwirtschaftliche Erntemaschine (10) nach Anspruch 6, **dadurch gekennzeichnet, dass** die Achsen (30, 31), um welche die Arbeitseinheiten (24) relativ zu den Entlastungsauslegern (20, 21) schwenkbar sind, in der Arbeitsstellung der Erntemaschine (10) in Längsrichtung derselben verlaufen.

8. Landwirtschaftliche Erntemaschine (10) nach einem der Ansprüche 4 bis 7, **dadurch gekennzeichnet, dass** ein an dem ersten jeweiligen Entlastungsausleger (20) angreifender Entlastungszylinder (22) als Druckzylinder und ein an dem zweiten jeweiligen Entlastungsausleger (21) angreifender Entlastungszylinder (23) als Zugzylinder ausgebildet ist.

9. Landwirtschaftliche Erntemaschine (10) nach einem der Ansprüche 1 bis 8, **dadurch gekennzeichnet, dass** die beiden jeweiligen Entlastungsausleger (20, 21) gekoppelt sind, um die relative Verlagerbarkeit der beiden jeweiligen Entlastungsausleger (20, 21) in der Arbeitsstellung der Erntemaschine (10) zueinander zu begrenzen.

10. Landwirtschaftliche Erntemaschine (10) nach Anspruch 9, **dadurch gekennzeichnet, dass** eine jeweilige Koppelstange (32) an einem ersten Ende gelenkig an einem der beiden jeweiligen Entlastungsausleger (20) angreift, und dass an einem gegenüberliegende zweiten Ende der jeweiligen Koppelstange ein Langloch (33) ausgebildet ist, in welchem der andere der beiden jeweiligen Entlastungsausleger (21) mit einem Vorsprung (38) geführt ist, wobei das Langloch (33) die relative Verlagerbarkeit der beiden jeweiligen Entlastungsausleger (20, 21) in der Arbeitsstellung der Erntemaschine (10) zueinander begrenzt.

11. Landwirtschaftliche Erntemaschine (10) nach einem der Ansprüche 1 bis 10, **gekennzeichnet durch** einen Sperrzylinder (34), welcher in der Transportstellung und/oder einer Vorgewendestellung der Erntemaschine (10) eine Pendelbewegung der Arbeitseinheiten (24) gegenüber dem jeweiligen Entlastungsausleger (20, 21) unterbindet und/oder die Arbeitseinheiten (24) in eine für die Verlagerung in die Transportstellung und/oder in eine Vorgewendestellung definierte Lage oder Ausrichtung bringt und in dieser fixiert.

12. Landwirtschaftliche Erntemaschine (10) nach einem der Ansprüche 1 bis 11, **dadurch gekennzeichnet, dass** die an den beiden jeweiligen Entlastungsauslegern (20, 21) angreifenden Arbeitseinheiten (24) gekoppelt sind, um die relative Verlagerbarkeit der beiden jeweiligen Arbeitseinheiten (24) in der Arbeitsstellung der Erntemaschine (10) zueinander zu begrenzen.

13. Landwirtschaftliche Erntemaschine (10) nach einem der Ansprüche 1 bis 12, **dadurch gekennzeichnet, dass** dieselbe eine Futtererntemaschine ist.

14. Landwirtschaftliche Erntemaschine (10) nach Anspruch 13, **dadurch gekennzeichnet, dass** die Futtererntemaschine ein Merger oder Pickup-Band-Schwader ist, wobei an jedem der Entlastungsausleger (20, 21) als Arbeitseinheit (24) eine Pickup (25) und ein Bandfördersegment (26) angreift.
